# EUROPEAN PATENT APPLICATION

(11) **EP 3 313 036 A1**
(43) Date of publication of application: **25.04.2018**
(21) Application number: 16195317.9
(22) Date of filing: 24.10.2016
(51) Int. Cl.: H04L 27/34, H04J 11/00

(54) **LAYERED DIVISION MULTIPLEXING WITH UP-SAMPLED UPPER LAYER**

(71) Applicant: Panasonic Intellectual Property Corporation of America, Torrance, CA 90503 (US)
(72) Inventor: KLENNER, Peter, 63225 Langen (DE)
(74) Representative: Grünecker Patent- und Rechtsanwälte PartG mbB

(57) **Abstract**

The present invention relates a technique for broadcasting digital data, and in particular to layered-division multiplexing (LDM) in connection with orthogonal frequency division multiplexing (OFDM). In order to reduce inter-carrier interferences (ICI) for the data of the upper layer while using very long OFDM symbols for the data of the lower layer, it is the particular approach of the present invention to up-sample the modulated upper layer by a factor of M≥2 before combining same with the modulated lower layer signal. In this manner, upper layer data is modulated only on every M-th OFDM subcarrier, thus providing a significant reduction of ICI on time-varying channels.

## Description

### TECHNICAL FIELD

The present invention relates to the field of digital communications in the context of broadcasting digital data, and in particular to a novel multiplexing scheme for delivering different services to stationary and mobile users.

### BACKGROUND OF THE INVENTION

Multiplexing multiple signals into a compound signal is a common method in data communications to share a single medium. Traditionally, data carrying different services are multiplexed in time or frequency. These methods are called Time-Division-Multiplex (TDM) and Frequency-Division-Multiplex (FDM). Real-world applications for TDM and FDM can be found in DVB-T2, in which multiple so-called PLPs (Physical Layer Pipes), each characterized by their own modulation and time interleaver, are sharing a certain frequency band in dedicated time slots, and the Japanese ISDB-T standard with the prominent One-Seg system, in which data is carried in banded segments which are strictly separated in frequency domain thus allowing for power-saving partial reception of individual segments.

It has been long since known that FDM and TDM are not the most efficient methods to share a medium. Their benefit lays more with the ease of implementation. From the article "Cooperative broadcasting" by P. P. Bergmans and T. M. Cover (IEEE Trans. Inf. Theory, vol. 20, no. 3, pp. 317-324, May 1974), for instance, it is known that the *superposition* of different services increases the capacity over either TDM or FDM. Only recently, this form of multiplexing has found its way into a current standard, namely ATSC 3.0, where it is called Layered-Division-Multiplexing (LDM); cf. the article "Low Complexity Layered Division for ATSC 3.0," by S. I. Park, et.al. (IEEE Transactions on Broadcasting, vol. 62, no. 1, pp. 233-243, March 2016).

Intuitively, the edge of LDM over TDM/FDM in capacity is obtained due to the simultaneous transmission of more than one service without pausing in either time domain or frequency domain. In practice, however, LDM entails higher receiver complexity as well as constraints in the transmission system design.

### SUMMARY OF THE INVENTION

The conventional implementation of LDM leaves room for improvement. Therefore, it is an object of the present invention to provide improved methods for transmitting and receiving digital data, as well as a corresponding transmitter and receiver.

This is achieved by the features as set forth in the independent claims.

Preferred embodiments are the subject matter of dependent claims.

In the context of layered division multiplexing, it is the particular approach of the present invention to up-sample the core layer prior to its superposition with the enhancement layer. In this manner, the core layer will be less vulnerable to time-varying channels, even if long OFDM symbols are employed.

According to a first aspect of the present invention, a method for transmitting digital data is provided. The method comprises the steps of generating a first modulated signal by modulating digital data of a first service; generating a second modulated signal by modulating digital data of a second service; generating a compound signal by adding the first modulated signal and the second modulated signal; and transmitting the compound signal. The method is characterized by up-sampling the first modulated signal by a factor of M, M being a positive integer greater than 1, wherein the compound signal is generated by adding the up-sampled signal and the second modulated signal.

The first modulated signal is preferably up-sampled by inserting (M-1) zeroes between every two consecutive samples of the first modulated signal. Other up-sampling methods are conceivable, but suppression of inter-carrier interference is most effective if spectral energy of sub-carriers not carrying the first service is reduced to zero.

In a preferred embodiment, the up-sampled signal may be scaled by a factor of sqrt(M) in order to compensate the reduction of power caused by the up-sampling process. Different scaling factors that approximate the theoretical value of sqrt(M) may also be used. Other embodiments may dispense with the compensation of power reduction.

In another preferred embodiment, the second modulated signal is scaled by a predefined positive factor smaller than or equal to 1 in order to control the injection level of the second layer data. This step can be dispensed with if the modulation of the second layer data results in a modulated signal with the appropriate amplitude. Additionally or alternatively, a power level of the compound signal may be normalized by another scaling operation. Other means for controlling the injection level and the overall power of the compound signal are conceivable, including scaling both the first modulated signal and the second modulated signal by appropriate weights prior to the adding step.

A preferred embodiment further comprises the step of dividing the compound signal into frames of a predefined length, wherein data of each frame is transmitted simultaneously by means of orthogonal frequency division multiplexing, OFDM. OFDM is the preferred method for transmitting digital data over a broadband communication channel and used in many digital broadcasting and communication standards, incl. DVB-T2 and ATSC 3.0.

Preferably, data of the first service is transmitted on every M-th OFDM subcarrier only. This reduces ICI for the first layer data on time-varying channels and allows at the same time long OFDM symbols for the second layer data. Mobile devices may thus receive the first service with high reliability, whereas stationary devices may additionally receive the second service at a high data rate.

According to a second aspect of the present invention, a method for receiving digital data is provided. Said method comprises the steps of receiving a compound signal; down-sampling the received compound signal by a factor of M, M being a positive integer greater than 1; and retrieving digital data of a first service by demodulating the down-sampled signal.

In a preferred embodiment, the method further comprises the steps of generating a re-modulated signal by modulating the retrieved digital data of the first service; up-sampling the re-modulated signal by the factor of M; generating a difference signal by subtracting the up-sampled signal from the compound signal; and retrieving digital data of a second service by demodulating the difference signal.

The receiving method may further comprise the step of scaling the up-sampled and re-modulated signal by a factor of sqrt(M), in order to compensate the power reduction caused by the up-sampling process.

In a preferred embodiment, the compound signal is received by decoding a sequence of OFDM symbols. Moreover, the down-sampling step may keep every M-th OFDM subcarrier only, thereby achieving the advantages of the present invention, i.e., a reduction of ICI on rapidly time-varying channels.

According to a third aspect of the present invention, a transmitter for transmitting digital data is provided. The transmitter comprises a first modulator for generating a first modulated signal by modulating digital data of a first service; a second modulator for generating a second modulated signal by modulating digital data of a second service; a signal combiner for generating a compound signal by adding the first modulated signal and the second modulated signal; and an output stage for transmitting the compound signal. The transmitter is characterized by an up-sampling unit for up-sampling the first modulated signal by a factor of M, M being a positive integer greater than 1, wherein the compound signal is generated by adding the up-sampled signal and the second modulated signal.

According to a fourth aspect of the present invention, a receiver for receiving digital data is provided. The receiver comprises an input stage for receiving a compound signal; a down-sampling unit for down-sampling the received compound signal by a factor of M, M being a positive integer greater than 1; a first demodulator for retrieving digital data of a first service by demodulating the down-sampled signal.

In a preferred embodiment, the receiver further comprises a modulator for generating a re-modulated signal by modulating the retrieved digital data of the first service; an up-sampling unit for up-sampling the re-modulated signal by the factor of M; a signal subtractor for generating a difference signal by subtracting the up-sampled signal from the compound signal; and a second demodulator for retrieving digital data of a second service by demodulating the difference signal. In this manner the receiver is capable of retrieving both the first layer data and the second layer data.

### BRIEF DESCRIPTION OF THE DRAWINGS

The above and other objects and features of the present invention will become more apparent from the following description and preferred embodiments given in conjunction with the accompanying drawings, in which:
- Fig. 1: is a block diagram which illustrates a conventional technique for constellation superposition for two-layer LDM according to ATSC 3.0;
- Fig. 2A: is a spectrum diagram which illustrates strictly orthogonal subcarriers as received over a static channel;
- Fig. 2B: is a spectrum diagram which illustrates intercarrier-interference among subcarriers received over a rapidly time-varying channel;
- Fig. 3: is a spectrum diagram which illustrates reduced intercarrier-interferences in a situation where only every other subcarrier is modulated;
- Fig. 4A: is a spectrum diagram which which illustrates subcarriers in a situation where LDM and OFDM are used on a static channel;
- Fig. 4B: is a spectrum diagram which illustrates subcarriers in a situation where LDM and OFDM are used on a rapidly time varying channel;
- Fig. 5: is a block diagram which illustrates a technique for constellation superposition for two-layer LDM according to an embodiment of the present invention;
- Fig. 6A: is a spectrum diagram which illustrates transmitted OFDM symbols with an LDM compound signal according to an embodiment of the present invention;
- Fig. 6B: is a spectrum diagram which illustrates OFDM symbols with an LDM compound signal received over a rapidly time-varying channel, according to an embodiment of the present invention;
- Fig. 7: is a schematic block diagram of a transmitter for two LDM layers according to an embodiment of the present invention; and
- Fig. 8A: is a schematic block diagram of a receiver for the upper layer according to an embodiment of the present invention; and
- Fig. 8B: is a schematic block diagram of a SIC-Receiver for the lower layer according to an embodiment of the present invention.

### DETAILED DESCRIPTION

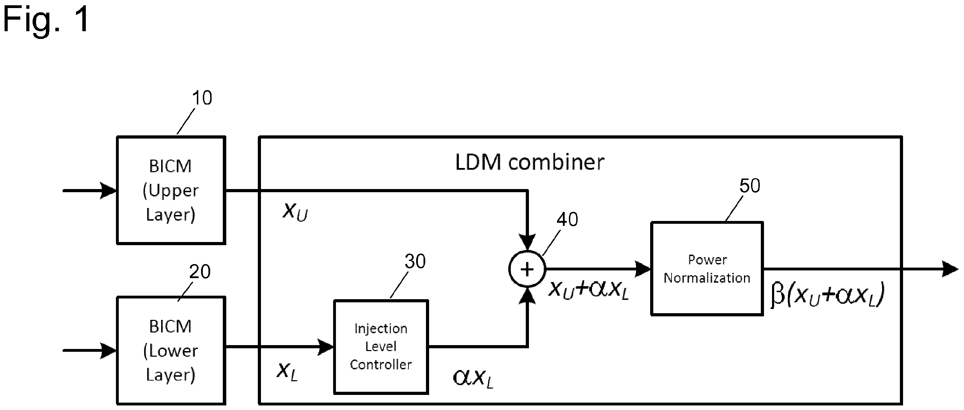

Fig. 1 illustrates the general concept of LDM for two layers, which are called upper and lower layer. In principle, of course, more than two layers are conceivable. Both layers can carry one or more physical layer pipes (PLPs). The upper layer carries a low-rate service x_{U} aimed at mobile reception, while the lower layer carries a high-rate service x_{L} aimed at stationary reception. An injection level controller provides a scaling factor α ≤ 1 which lowers the power of the lower layer, followed by a superposition of the two layers yielding the non-normalized signal x_{U} + α x_{L}. The compound signal is subsequently normalized to unit power via an appropriate scaling factor β.

ATSC 3.0, a new digital terrestrial television (DTT) system and the first to implement LDM, is based on orthogonal frequency division multiplexing (OFDM) and bit-interleaved coded modulation (BICM). In Fig. 1, there is thus a first BICM unit (10) for the digital data of the upper layer and a second BICM unit (20) for the digital data of the lower layer. Each BICM unit (10, 20) includes an encoder (not shown) for encoding the input data with an error correcting code, a bit interleaver (not shown) for increasing the resilience to burst errors, and a symbol mapper (not shown) for mapping the coded and interleaved bit sequence into a base-band sequence of complex digital symbols or cells. Here, the sequence of symbols is also referred to as a modulated signal.

The modulated signal of the lower layer is fed through the injection level controller (30), which applies a scaling by factor α ≤ 1. The scaled lower layer signal and the (unscaled) upper layer signal are then combined by means of a signal adder (40), which performs algebraic addition on a cell-by-cell basis. The result of this operation may be scaled once more in order to normalize the power of the compound signal (power normalization unit 50). The process of controlling the injection level and the process of normalizing the power of the compound signal may also be combined into a single step of computing a suitably weighted sum of the two signals, or performed in any other suitable manner.

It is noted that in ATSC 3.0, the upper layer is called core layer, and the lower layer enhanced layer. Other than that layered division multiplexing was specified as depicted in Figure 1.

The corresponding receiver operation is understood such that a mobile receiver, which is interested in the upper layer only, also detects the upper layer only. A stationary receiver interested in the lower layer is required to perform successive interference cancellation, i.e., the upper layer is detected first. Assuming that the upper layer is detected successfully, it is then re-modulated and the re-modulated cells are subtracted from the received cells in order to detect eventually the lower layer.

According to Figure 1, each cell of the upper layer is paired with a corresponding cell from the lower layer resulting in a compound signal which is subsequently passed on to the interleaving stages, the framing and finally OFDM itself.

Here, the first compromise can be observed: time interleaving and frequency interleaving are applied to the compound signal, although different interleaving stages might be desirable for mobile and stationary signals. It is conceivable that both signals employ dedicated interleaving stages; this leads, however, to increased receiver complexity on account of additional interleaving operations during the successive interference cancellation.

The second compromise follows from the carriage of the compound signal on a single OFDM signal, i.e., both layers implicitly use the same FFT length. Here, a clear design conflict comes to light: the mobile upper layer would benefit from a short FFT to be resilient against Doppler spread, while the stationary lower layer would benefit from a long FFT to minimize the loss in terms of the guard interval. In practice, a middle ground is chosen in the form of an 8k or 16k FFT rather than a 32k FFT.

Orthogonal Frequency Division Multiplexing is an established method to transmit data over a wide bandwidth. Multipath effects are elegantly coped with by transmitting data in orthogonal subcarriers, and by additionally expanding the OFDM symbol duration beyond the maximum expected delay spread of the channel using a cyclic prefix which simplifies the equalization step at the receiver.

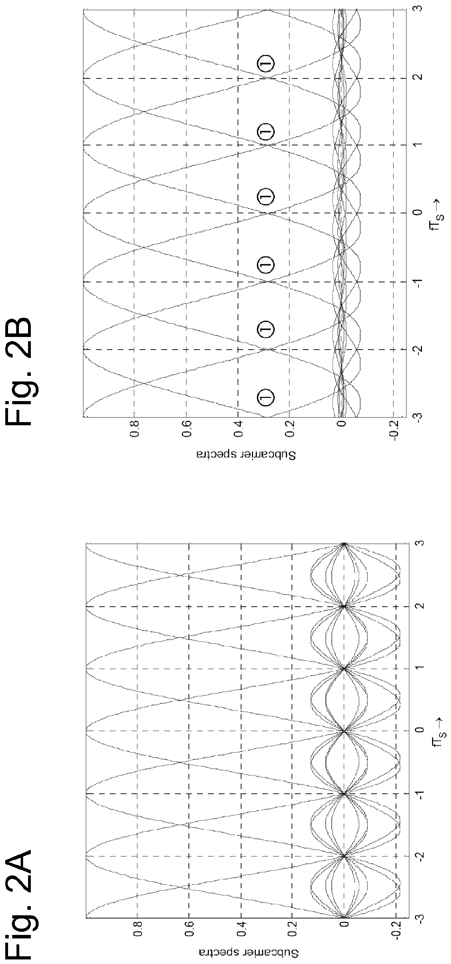

Fig. 2A is a spectrum diagram which illustrates strictly orthogonal subcarriers as received over a static channel. The subcarrier spectra exhibit their typical sinc-type behavior and at integer multiples of the normalized frequency f T_{S} only a single subcarrier is non-zero, while all neighboring subcarriers are passing through zero. Here, f Ts denotes the frequency f normalized to the subcarrier spacing 1/Ts with Ts denoting the OFDM symbol duration.

However, the prolonged symbol duration makes OFDM vulnerable to time-varying changes of the channel. In particular, the orthogonality of the subcarriers is lost if the channel impulse response changes during an OFDM symbol. This is a straightforward consequence of the Fourier transformation and its correspondences between time and frequency domain. As a consequence of the lost subcarrier orthogonality in frequency domain after the FFT, intercarrier-interference (ICI) may occur, which diminishes the carrier-to-interference-and-noise-power CINR and the more so the faster the receiver is moving.

Fig. 2B is a spectrum diagram which illustrates intercarrier-interference among subcarriers received over a rapidly time-varying channel. As can be seen, the subcarrier spectra are widened on account of a time-varying channel and thus at any given subcarriers its neighboring subcarriers are now non-zero (indicated by ①) and interfere with each other. This should be compared to the strictly orthogonal conditions in Figure 2A without ICI.

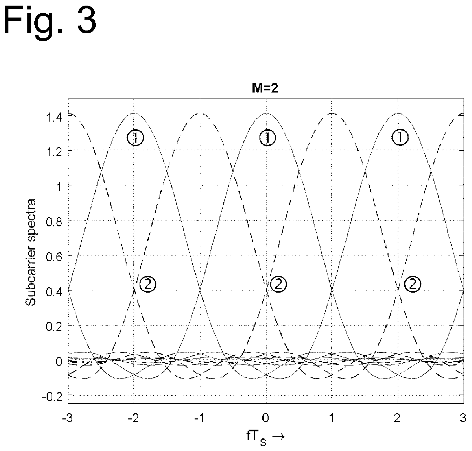

Fig. 3 is a spectrum diagram which illustrates reduced intercarrier-interferences in a situation where only every other subcarrier is modulated (solid lines, ①). The modulated subcarriers are boosted by a value of γ = sqrt(2) ≈ 1.414 to yield unit power, and the unmodulated subcarriers (dashed lines) are shown only for reference and are not actually transmitted. It is easily observed that the largest contributing interference (②) from the two neighboring subcarriers is suppressed, and the CINR at the actively modulated subcarriers (①) is increased.

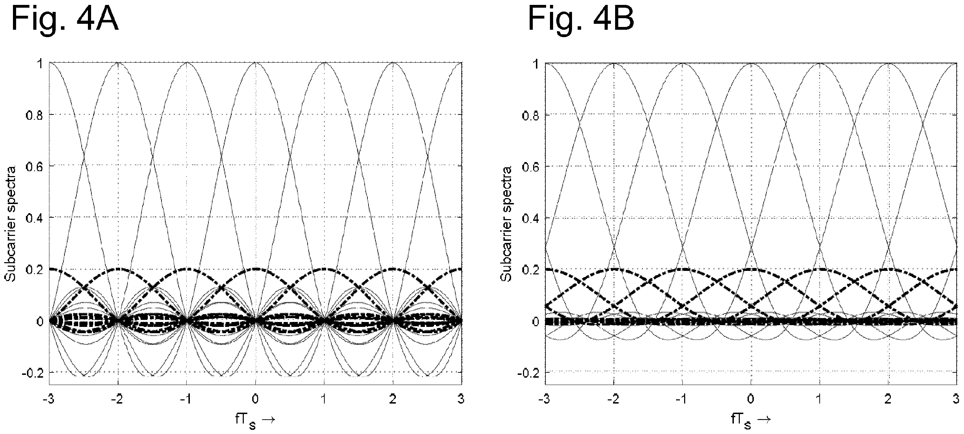

Figure 4A shows the relationship of all subcarriers in a situation where LDM is performed according to Figure 1 and the compound signal is modulated onto an OFDM symbol. The upper layer is shown with solid lines, the lower layer after lowering its power to its chosen injection level with dash-dotted lines. Figure 4B depicts the ICI situation in case of rapidly time-varying conditions, i.e., ICI is caused by both upper and lower layer.

Hence, in principle, LDM can serve different types of receiver, e.g. mobile and stationary, simultaneously in an information-theoretically optimal way. However, when LDM is paired with OFDM to cope with multipath effects, a single FFT length is implicitly assigned to both layers, although the mobile layer would preferably employ a short FFT for Doppler resilience and the stationary layer a long FFT for high spectral efficiency.

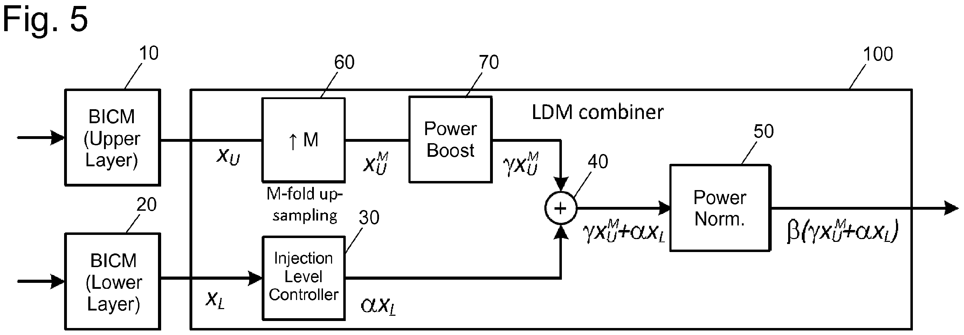

The present invention resolves this conflict between the preference for a long FFT and Doppler resilience with the configuration depicted in Figure 5.

Fig. 5 is a block diagram which illustrates a technique for constellation superposition for two-layer LDM according to an embodiment of the present invention. Fig. 5 is similar to the generic LDM combiner shown in Figure 1, wherein like elements are identified by like reference numerals, a detailed description thereof will be omitted.

The configuration of Fig. 5 differs from the conventional configuration of Fig. 1 in that the LDM combiner (100) further comprises an up-sampling unit (60) and a power booster (70) in the upper layer branch. The up-sampling unit (60) performs M-fold up-sampling on its input signal. This may be achieved, for instance, by inserting (M-1) zeros between every two consecutive samples (symbols or cells) of x_{U} at its input, thus yielding the up-sampled signal x_{U}^{M}. The insertion of zeroes implies a reduction of power. In order to compensate the power reduction, a power booster (70) is provided which boosts the signal's power by a factor γ which equals the square root of the up-sampling factor M, i.e., γ=sqrt(M). This power-boost causes the upper-layer signal γ x_{U}^{M} to have unit-power.

The benefit of this approach is that the LDM compound signal can be carried on a very long OFDM signal with e.g. 32k FFT, such that the lower layer can utilize every subcarrier, thus being highly spectral efficient, whereas the upper layer utilizes every M-th subcarrier only, thus being highly robust against Doppler spread.

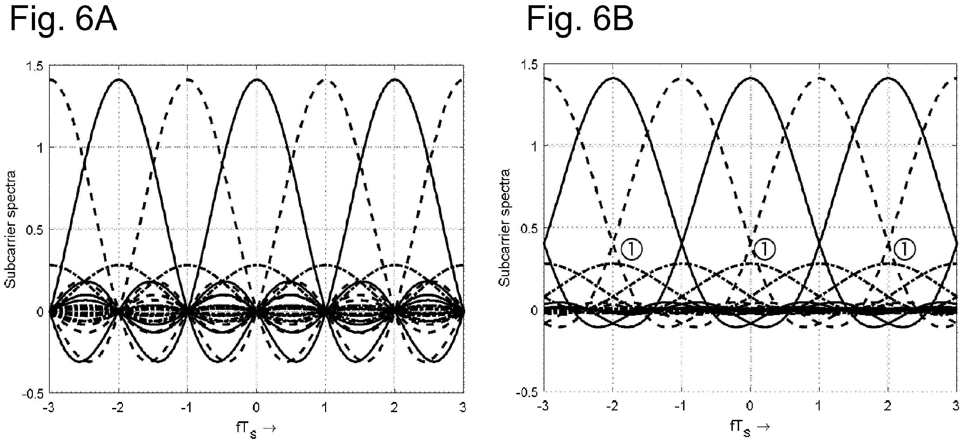

Fig. 6A is a spectrum diagram which illustrates a transmitted OFDM symbol with an LDM compound signal according to an embodiment of the present invention. Fig. 6A is similar to Fig. 4A, except that data of the upper layer (solid lines) is modulated on even subcarriers only (M = 2), whereas data of the lower layer (dash-dotted lines) is modulated on all subcarriers. The spectral energy of odd subcarriers of the conventional compound signal of Fig. 4A is represented, for illustrative purposes only, by dashed lines. This signal component is absent in the LDM compound signal of the present invention.

Fig. 6B is a spectrum diagram which illustrates the OFDM symbol of Fig. 6A as they are received over a time-varying channel. Fig. 6B is similar to Fig. 4B, except that data of the upper layer (solid lines) is modulated on even subcarriers only (M = 2), whereas data of the lower layer (dash-dotted lines) is modulated on all subcarriers. As in Fig. 6A, the spectral energy of odd subcarriers of the conventional compound signal is represented, for illustrative purposes only, by dashed lines. This signal component is absent in the LDM compound signal of the present invention. As can be seen from Fig. 6B, and in particular from a comparison of Fig. 6B and 4B, the inter-carrier interference from neighboring subcarriers is significantly reduced (①), as compared to the conventional LDM compound signal.

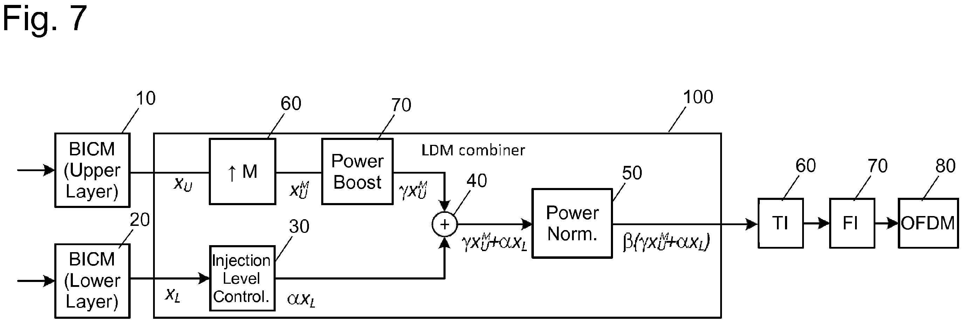

Fig. 7 is a schematic block diagram of a transmitter for two LDM layers according to an embodiment of the present invention. Fig. 7 is similar to the generic LDM combiner shown in Figure 1 and the LDM combiner according to the embodiment of Fig. 5, wherein like elements are identified by like reference numerals, a detailed description thereof will be omitted.

The transmitter comprises two BICM units (10, 20) for each of the upper layer data and the lower layer data, respectively. Each BICM unit (10, 20) includes an encoder (not shown) for encoding the input data with an error correcting code, a bit interleaver (not shown) for increasing the resilience to burst errors, and a cell mapper (not shown) for mapping the coded and interleaved bit sequence into a base-band sequence of complex digital symbols. The modulated signal of the upper layer and the modulated signal of the lower layer are then combined in LDM combiner (100) into a compound signal, as explained above in conjunction with Fig. 5.

The compound signal generated by the LDM combiner (100) is then fed through various other processing units in order to generate the desired transmit signal. These processing units may include time interleaver (60), frequency interleaver (70), OFDM framer (80), pilot insertion (not shown), inverse fourier transformation (not shown), digital/analog conversion (not shown), power amplification (not shown), etc. The result of these processing steps may then be transmitted by broadcast antennas.

It should be understood that the transmitted signal is provided for two types of receivers: i) a mobile receiver, which experiences high Doppler spread and thus benefits from the virtually increased subcarrier spacing on the upper layer, and (ii) a stationary receiver, which does not suffer from high Doppler spread and hence benefits from a long FFT length.

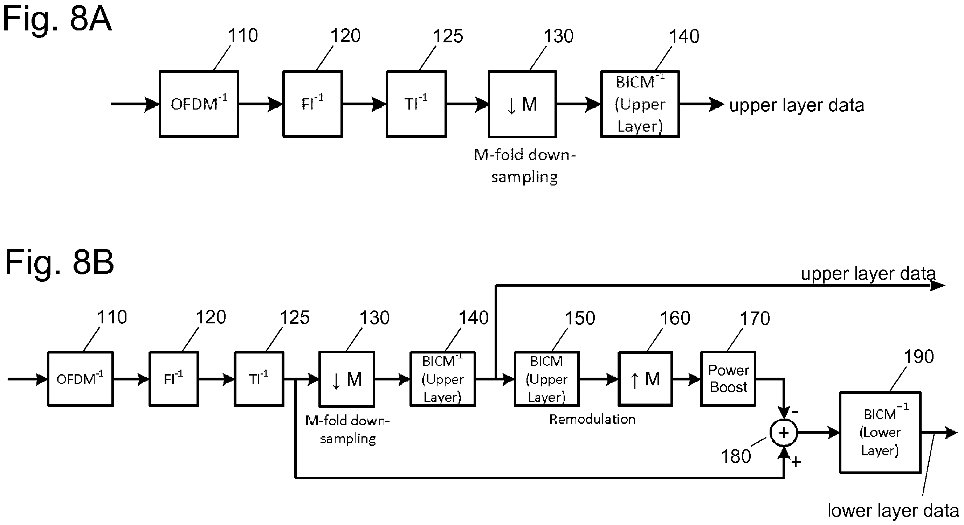

Fig. 8A is a schematic block diagram for a receiver, e.g., a mobile receiver, that is configured for receiving the upper layer only. The receiver comprises an OFDM demodulator (110) and a frequency deinterleaver (120) followed by a time deinterleaver (125) for receiving a compound signal. The received compound signal is down-sampled by a factor M in down-sampling unit (130) to isolate the subcarriers that carry the upper layer data. The down-sampled signal is then demodulated in demodulator (140) in order to retrieve the digital data of the upper layer.

Fig. 8B is a schematic block diagram for a receiver, e.g., a stationary receiver, that is configured for receiving both the upper layer and the lower layer. The receiver of Fig. 8B comprises all components of the receiver of Fig. 8A, including the OFDM demodulator (110), the frequency deinterleaver (120), and the time interleaver (125) for receiving a compound signal. The received compound signal is down-sampled by a factor M in down-sampling unit (130) to isolate the subcarriers that carry the upper layer data. The digital data of the upper layer is retrieved by means of a first demodulator (140).

In order to retrieve also the lower layer data, a modulator 150 is provided for re-modulating the upper layer data, an up-sampling unit (160) for up-sampling the re-modulated signal, and an amplifier (170) for adjusting the power level of the up-sampled signal. The output signal of the amplifier (170) is then subtracted by means of signal subtractor 180 from the received compound signal, thus providing the received compound signal free of the interference from the re-modulated upper layer signal, which is then demodulated in a second demodulator (190).

The present invention has been described in terms of specific embodiments that are not supposed to limit the scope of the appended claims. Various modifications can be made without departing from the scope of the appended claims.

For instance, the above embodiments relate to layered division multiplexing with two layers only. The present invention, however, can also be applied to three or more distinct layers. In this case, the up-sampling step may be applied to one or more of the upper-most layers. The upper-most layer may be up-sampled with an up-sampling factor that is equal to or greater than the up-sampling factor of the next lower layer.

Further, a reduction of the inter-carrier interference has been described in conjunction with two-fold up-sampling of the upper layer signal. However, other up-sampling factors, such as M = 3 or M = 4, etc., may be employed, depending on data rates, in order to further increase the spectral distance of subcarriers carrying the upper layer data and to further reduce inter-carrier interference.

Further, the present invention has been presented in the context of digital data broadcasting based on bit-interleaved coded modulation which includes specific forward error correcting codes (FECs), specific bit-interleavers, and specific symbol mappers. However, the present invention can likewise be applied to any other form of modulation that converts digital data into a modulated signal consisting of a sequence of complex-valued or real-valued cells.

Finally, although the present invention has been presented in the context of orthogonal frequency division multiplexing, it may also be applied to other forms of multi-carrier modulation.

Summarizing, the present invention relates a technique for broadcasting digital data, and in particular to layered-division multiplexing in connection with orthogonal frequency division multiplexing. In order to reduce inter-carrier interferences for the data of the upper layer while using very long OFDM symbols for the data of the lower layer, it is the particular approach of the present invention to up-sample the modulated upper layer by a factor of M≥2 before combining same with the modulated lower layer signal. In this manner, upper layer data is modulated only on every M-th OFDM subcarrier, thus providing a significant reduction of ICI on time-varying channels.

## Claims

1. A method for transmitting digital data, said method comprising the steps of
generating (10) a first modulated signal by modulating digital data of a first service;
generating (20) a second modulated signal by modulating digital data of a second service;
generating (40) a compound signal by adding the first modulated signal and the second modulated signal; and
transmitting the compound signal,
**characterized by**
up-sampling (60) the first modulated signal by a factor of M, M being a positive integer greater than 1, wherein the compound signal is generated by adding the up-sampled signal and the second modulated signal.

2. The method of claim 1, wherein the first modulated signal is up-sampled by inserting (M-1) zeroes between every two consecutive samples of the first modulated signal.

3. The method of claim 1 or 2, further comprising the step of scaling (70) the up-sampled signal by a factor of sqrt(M).

4. The method of any of claims 1 to 3, further comprising the step of scaling (30) the second modulated signal by a predefined positive factor smaller than or equal to 1; and/or the step of normalizing (50) a power level of the compound signal.

5. The method of any of claims 1 to 4, further comprising the step of dividing the compound signal into frames of a predefined length, wherein data of each frame is transmitted simultaneously by means of orthogonal frequency division multiplexing, OFDM.

6. The method of claim 5, wherein data of the first service is transmitted on every M-th OFDM subcarrier only.

7. A method for receiving digital data, said method comprising the steps of
receiving (110-125) a compound signal;
down-sampling (130) the received compound signal by a factor of M, M being a positive integer greater than 1; and
retrieving (140) digital data of a first service by demodulating the down-sampled signal.

8. The method of claim 7, further comprising
generating (150) a re-modulated signal by modulating the retrieved digital data of the first service;
up-sampling (160) the re-modulated signal by the factor of M;
generating (180) a difference signal by subtracting the up-sampled signal from the compound signal; and
retrieving (190) digital data of a second service by demodulating the difference signal.

9. The method of claim 8, further comprising the step of scaling (170) the up-sampled signal by a factor of sqrt(M).

10. The method of any of claim 8 or 9, wherein the compound signal is received by decoding a sequence of OFDM symbols.

11. The method of any of claim 10, wherein the down-sampling step keeps every M-th OFDM subcarrier only.

12. A transmitter for transmitting digital data, said transmitter comprising a first modulator (10) for generating a first modulated signal by modulating digital data of a first service;
a second modulator (20) for generating a second modulated signal by modulating digital data of a second service;
a signal combiner (40) for generating a compound signal by adding the first modulated signal and the second modulated signal; and
an output stage for transmitting the compound signal,
**characterized by**
an up-sampling unit (60) for up-sampling the first modulated signal by a factor of M, M being a positive integer greater than 1, wherein the compound signal is generated by adding the up-sampled signal and the second modulated signal.

13. A receiver for receiving digital data, said receiver comprising
an input stage (110-125) for receiving a compound signal;
a down-sampling unit (130) for down-sampling the received compound signal by a factor of M, M being a positive integer greater than 1; and
a first demodulator (140) for retrieving digital data of a first service by demodulating the down-sampled signal.

14. The receiver of claim 13, further comprising
a modulator (150) for generating a re-modulated signal by modulating the retrieved digital data of the first service;
an up-sampling unit (160) for up-sampling the re-modulated signal by the factor of M,
a signal subtractor (180) for generating a difference signal by subtracting the up-sampled signal from the compound signal; and
a second demodulator (190) for retrieving digital data of a second service by demodulating the difference signal.
